# EUROPÄISCHE PATENTSCHRIFT

(11) **EP 1 880 260 B1**
(45) Veröffentlichungstag und Bekanntmachung des Hinweises auf die Patenterteilung: **21.08.2013**
(21) Anmeldenummer: 06742594.2
(22) Anmeldetag: 15.04.2006
(51) Int. Cl.: G05D 16/20

(54) **PROPORTIONAL-DRUCKREGELVENTIL ZUR REGELUNG DES DRUCKNIVEAUS IN EINEM HYDRAULIKKREIS, INSBESONDERE IN EINEM HYDRAULIKKREIS EINES AUTOMATGETRIEBES**
PROPORTIONAL PRESSURE CONTROL VALVE FOR REGULATING THE PRESSURE LEVEL IN A HYDRAULIC CIRCUIT, PARTICULARLY IN A HYDRAULIC CIRCUIT OF AN AUTOMATED GEARBOX
SOUPAPE PROPORTIONNELLE DE REGULATION DE PRESSION SERVANT A REGULER LE NIVEAU DE PRESSION DANS UN CIRCUIT HYDRAULIQUE, EN PARTICULIER DANS UN CIRCUIT HYDRAULIQUE D'UNE BOITE DE VITESSES AUTOMATIQUE

(30) Priorität: 12.05.2005 DE 102005021902
(43) Veröffentlichungstag der Anmeldung: 23.01.2008
(73) Patentinhaber: ZF Friedrichshafen AG, 88038 Friedrichshafen (DE)
(72) Erfinder: MAYR, Karlheinz, A-6900 Bregenz (AT)
(86) Internationale Anmeldenummer: PCT/EP2006/003493
(87) Internationale Veröffentlichungsnummer: WO 2006/119840

(56) Entgegenhaltungen:
- WO-A-2005/026858
- DE-A1- 10 034 959
- DE-A1- 10 163 235
- DE-A1- 10 255 414
- US-A1- 2002 053 362

## Beschreibung

Die vorliegende Erfindung betrifft ein Proportional-Druckregelventil zur Regelung des Druckniveaus in einem Hydraulikkreis, insbesondere in einem Hydraulikkreis eines Automatgetriebes gemäß dem Oberbegriff des Patentanspruchs 1.

Aus dem Stand der Technik ist bekannt, den Druck in einem Hydraulikkreis eines Automatgetriebes bedarfsorientiert zu regeln. Während für die Schmierölversorgung der Getriebebauteile das Druckniveau im Hydraulikkreis niedrig gehalten werden kann, muss während der Schaltvorgänge der Druck stark angehoben werden, um beispielsweise Schaltelemente schnell befüllen zu können.

Für die Regelung des Drucks in derartigen Hydraulikkreisen werden üblicherweise Druckregler eingesetzt, die Nachfolgeschieber zur Betätigung von Schaltelementen ansteuern. Hierbei erfolgt die Steuerung der Nachfolgeschieber innerhalb des Druckreglers mittels eines Proportionalmagneten, welcher u.a. aus einem Magnetkern, einer Magnetspule und einem Magnetanker besteht. Über den Proportionalmagneten wird der Spulenstrom proportional zu der Ausgangsgröße gesteuert; der Magnetanker und damit der Nachfolgeschieber zur Kupplungsteuerung werden entsprechend dem Spulenstrom gesteuert. Aus den daraus resultierenden charakteristischen Magnetkraft-Strom-Kennlinien des Druckreglers werden in einer elektrohydraulischen Steuerung von Automatgetrieben die zur Kupplungsanpassung benötigten Kennlinien erzeugt.

Beispielsweise ist aus der DE 199 43 066 A1 ein elektromagnetisch betätigbares hydraulisches Proportionalventil bekannt, mit einem Magnetteil aus einer elektrisch ansteuerbaren Spule, einem in das Innere der Spule hineinragenden ortsfesten Kem und einem von der Spule beaufschlagten verschiebbar geführten Anker, der mit einem Schließglied gekoppelt ist und mit einem Ventilteil, das jeweils wenigstens einen Zulaufkanal, einen Rücklaufkanal und einen Arbeitskanal sowie einen Ventilsitz aufweist, der in Wirkverbindung mit dem Schließglied eine Druckmittelverbindung zwischen dem Arbeitskanal und dem Rücklaufkanal steuert. Das Schließglied weist hierbei zumindest im Bereich seines dem Ventilsitz zugewandten Endes einen im Wesentlichen kegelförmigen Dichtkörper auf, dessen kleinere Stirnfläche dem Ventilsitz zugewandt ist, wobei der Dichtkörper an seinem dem Ventilsitz abgewandten Ende wenigstens eine Strömungsabrisskante aufweist.

Durch diese Konstruktion soll ein stabiles Verhalten des Proportionalventils gegenüber Temperatureinflüssen und strömungsbedingten Schwingungsanregungen erzielt werden. Die Druck-/Strom-Kennlinien des Proportionalventils weisen einen gegenüber herkömmlichen Druckregelventilen konstanteren und stetigeren Verlauf auf, da die Dichteigenschaften und das Verschleißverhalten dieses Proportionalventils verbessert sind.

Ein weiteres Proportional-Druckregelventil, das als Vorsteuerventil mit einer Druckreduzier- und einer Druckhaltefunktion ausgebildet ist, ist im Rahmen der DE 199 04 901 A1 der Anmelderin beschrieben. Es besteht aus einem Ventilgehäuse mit Zu- und Ablauföffnungen, einem Steuerelement, einer Ankerstange und einem Proportionalmagneten, der einen Magnetkern, einen Magnetanker und eine Magnetspule umfasst, wobei der Proportionalmagnet in seinem Arbeitsbereich eine nahezu konstante Magnetkraft aufweist. In einer Halteposition des Magnetankers ist der kleinste axiale Abstand zwischen dem Magnetanker und dem Magnetkern derart bemessen, dass die Magnetkraft zwischen diesen beiden Bauteilen in der Halteposition größer ist als die Magnetkraft im Arbeitsbereich des Proportionalmagneten, wobei der Magnetanker durch diese Magnetkraft in der Halteposition feststellbar ist.

Des weiteren ist aus der DE 100 34 959 A1 der Anmelderin ein Proportional-Druckregelventil bekannt, mit einem Ventilteil, mit Zu- und Ablauföffnungen und mit wenigstens einem Schließmittel zum Steuern einer Blende und einer der Öffnungen, sowie einem Magnetteil mit einem Magnetkern, einer Magnetspule und einem verschiebbar angeordneten Magnetanker. Mit dem Anker wirkt ein Betätigungselement zusammen, welches das Schließmittel, insbesondere an der Blende der Zulauföffnung betätigt, wobei das Betätigungselement während des Regelvorgangs wenigstens teilweise in die Blende eindringt. Der hydraulisch wirksame Querschnitt der Blende wird dabei im Wesentlichen durch die Blendenlänge, den Blendendurchmesser und den Durchmesser des in die Blende eindringenden Teils des Betätigungselements in der Blende bestimmt.

Im Hinblick auf einen optimierten Durchfluss im Ventilteil, insbesondere im Bereich niedriger Temperaturen, d.h. bei höheren Viskositäten der Hydraulikflüssigkeit und im Hinblick auf geringere Strömungswiderstände weist das Proportional-Druckregelventil gemäß der DE 100 34 959 A1 eine optimierte Ausprägung der durchflussbestimmenden Zuführgeometrie auf; das Verhältnis der Blendenlänge zum Blendendurchmesser ist kleiner als 2,0 gewählt, wobei diese durchflussbestimmende Blende insbesondere in der Zulauföffnung des Ventils angeordnet ist. Dadurch wird erreicht, dass dieses Ventil geringere Strömungsverluste, insbesondere bei hohen Ölviskositäten, d.h. bei niedrigen Temperaturen aufweist; es werden höhere Durchflussmengen und kürzere Ansprechzeiten des Ventils erzielt, wodurch dieses Proportional-Druckregelventil bessere dynamische Werte ermöglicht.

Aus der WO 2005/026858 A1 ist zudem ein ProportionalDruckregelventil bekannt, das ein Magnetteil und ein Ventilteil aufweist, wobei das Ventilteil mit einer Zulauföffnung für den Zulaufvolumenstrom, einer ersten Ablauföffnung für den Füllvolumenstrom und einer zweiten Ablauföffnung für den Tankvolumenstrom versehen ist, und einen Kugelsitz, einen mit einer Öffnung versehenen Flachsitz, ein Schließteil zur Steuerung der Durchlaufmenge durch die Öffnung im Flachsitz und einen Strahlumlenker aufweist, der zwischen dem Kugelsitz und dem Flachsitz angeordnet ist.

Hierbei ist vorgesehen, dass die Zulauföffnung für den Zulaufvolumenstrom an dem dem Magnetteil abgewandten stimseitigen Ende des Ventilteils koaxial zu dessen Längsachse ausgebildet ist, dass die Ablauföffnung für den Füllvolumenstrom für die Kupplung an der Seitenwand des Ventilteils radial zu dessen Längsachse ausgebildet ist, derart, dass von der Zulauföffnung zur Ablauföffnung strömende Fluidteilchen einer Ablenkung von maximal 90 ° ausgesetzt sind, und dass der axiale Abstand des Strahlumlenkers von dem Kugelsitz, sowie der Durchmesser, die Wanddicke und die Ausgestaltung des Strahlumlenkers derart gewählt sind, dass die nach dem Durchströmen des Kugelsitzes zu dem und durch den Strahlumlenker strömenden Fluidteilchen einer Ablenkung von weniger als 30° ausgesetzt sind.

In Automatgetrieben, insbesondere in Automatgetrieben von PKW werden vornehmlich hydrodynamische Wandler als Anfahrelement eingesetzt. Speziell bei kaltem Getriebeöl ist der Energiebedarf des Wandlers sehr hoch, wodurch das Anfahrverhalten des Fahrzeugs in nachteiliger Weise beeinträchtigt wird. Ebenso ist das Ansprechverhalten der Getriebeschaltelemente im Minustemperaturbereich gleichermaßen verzögert, was ebenfalls negativ auffällt.

Der vorliegenden Erfindung liegt die Aufgabe zugrunde, ein Proportional-Druckregelventil zur Regelung des Druckniveaus in einem Hydraulikkreis anzugeben, mittels dessen eine Steigerung der dynamischen Regelfähigkeit von Lastschaltkupplungen, insbesondere der Anfahrkupplung in einem Automatgetriebe, ohne ein hydrodynamisches Anfahrelement erzielbar ist.

Insbesondere soll durch eine Steigerung der Eckfrequenz, beispielsweise des Systems bestehend aus dem Druckregelelement und einer nassen Anfahrkupplung, zum einen bei Minustemperaturen ein ähnlich guter Anfahrkomfort wie bei einem einen hydrodynamischen Wandler umfassenden Getriebe erzielt werden und zum anderen sollen auch Lastschaltungen spontaner, d.h. fühlbar direkter ablaufen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Proportional-Druckregelventil vorgeschlagen, umfassend ein Magnetteil und ein Ventilteil, wobei das Ventilteil eine Zulauföffnung für den Zulaufvolumenstrom, eine erste Ablauföffnung für den Arbeitsdruckanschluss, eine zweite Ablauföffnung für den Tankvolumenstrom, einen Kugelsitz, einen mit einer Öffnung versehenen Flachsitz, ein Schließglied zur Steuerung der Durchlaufmenge durch die Öffnung des Flachsitzes und einen Strahlumlenker aufweist, der zwischen dem Kugelsitz und dem Flachsitz angeordnet ist, bei dem der Strahlumlenker entlang der Längsachse des Proportional-Druckregelventils symmetrisch ausgeführt ist, und einen Grundkörper mit einer Kegelmantelgeometrie aufweist, wobei der Grundkörper über Stege an das Ventilteil angebunden ist.

Vorzugsweise ist der Durchmesser des Strahlumlenkers ≤ 1,25 NW, wobei NW die Nennweite ist, die als der Durchmesser der Öffnung des Flachsitzes definiert ist.

Des Weiteren ist der Strahlumlenker derart zwischen dem Kugelsitz und dem Flachsitz angeordnet, dass der Positionierabstand v zum Kugelsitzaustritt ≥ 0,5 NW ist und der Positionierabstand h zum Ringströmungseintritt ≥ 0,3 NW ist.

Gemäß der Erfindung wirkt der Strahlumlenker durch die Kegelmantelgeometrie des Grundkörpers im Zusammenspiel mit den Positionierabständen v und h derart, dass der Unterschied der Winkel α und β zwischen den Projektionslinien vom Scheitelpunkt des Strahlumlenkers zur Ein- bzw. zur Abströmkante hin und der mittleren Strömungsachse im Strahlumlenkerbereich kleiner 3 ° beträgt und eine gute Strömungssymmetrie bezüglich der Normalen s entlang der mittleren Strömungsachse im Strahlumlenkerbereich entsteht.

Erfindungsgemäß ist der Strahlumlenker derart ausgebildet und positioniert, dass der Anströmwinkel zur Längsachse des Ventils ≤ 60 ° beträgt. Hierbei können die Kanten des Strahlumlenkers verrundet ausgeführt sein, wobei sich bei verrundeten Kanten ein Krümmungsradius in der Größenordnung von 0,1 NW oder größer als besonders vorteilhaft erweist.

Es ist vorgesehen, dass die Abströmkanten am Ringströmungseintritt verrundet oder scharfkantig ausgeführt sein können, wobei bei verrundeten Kanten ein Krümmungsradius in der Größenordnung von 0,1 NW oder größer gewählt wird.

Durch die erfindungsgemäße Konzeption und insbesondere durch die strömungsverlustarme, symmetrische Ausführung des Strahlumlenkers wird eine wirbelfreie Strömung bzw. Umströmung des Strahlumlenkers ermöglicht.

Die Erfindung wird im Folgenden anhand der beigefügten Figuren beispielhaft näher erläutert. Es stellen dar:
- Figur 1: eine schematische Schnittansicht eines erfindungsgemäßen Proportional-Druckregelventils; und
- Figur 2: eine schematische Schnittansicht des erfindungsgemäßen Proportional-Druckregelventils gemäß Figur 1, bei der der Anströmwinkel y zur Längsachse des Ventils sowie die Winkel α und β der Projektionslinien z, y vom Scheitelpunkt des Strahlumlenkers zur Ein- bzw. zur Abströmkante eingezeichnet sind.

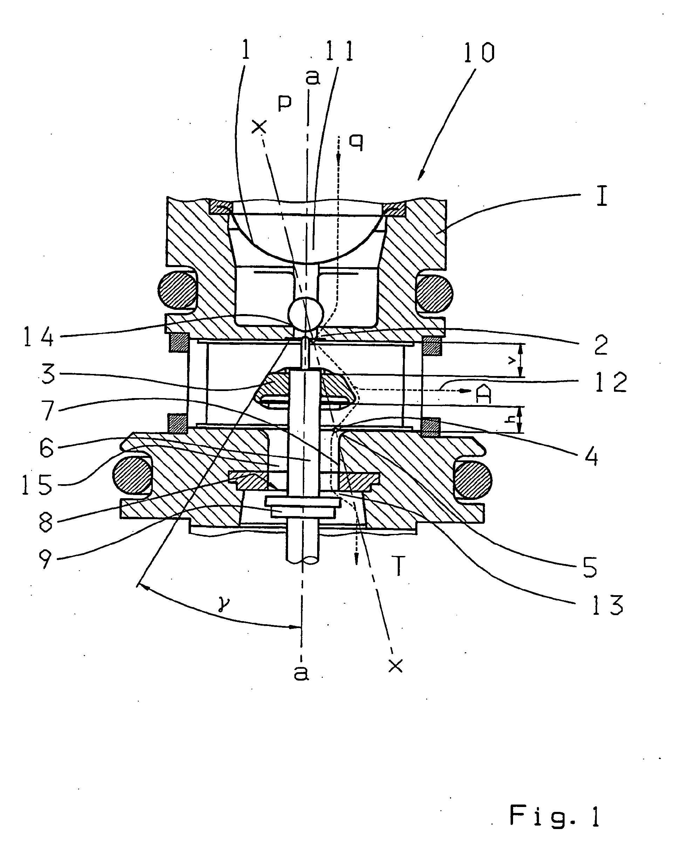

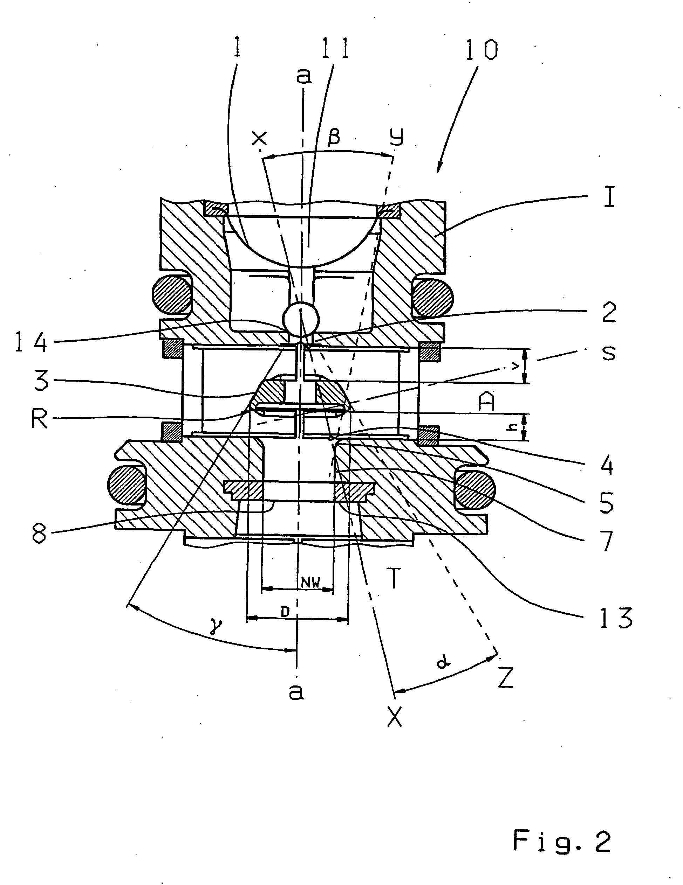

In den Figuren 1 und 2 ist ein Proportional-Druckregelventil 10 dargestellt, umfassend ein Magnetteil und ein Ventilteil, wobei das Ventilteil eine Zulauföffnung 11 für den Zulaufvolumenstrom, dessen Zulaufdruck mit p bezeichnet ist, eine erste Ablauföffnung 12 für den Arbeitsdruckanschluss A, eine zweite Ablauföffnung 13 für den Tankvolumenstrom zum Tank T, einen Kugelsitz 14, einen mit einer Öffnung 15 versehenen Flachsitz 8, ein Schließglied 9 zur Steuerung der Durchlaufmenge durch die Öffnung 15 des Flachsitzes 8 und einen Strahlumlenker 3 aufweist. Des Weiteren ist vor der Zulauföffnung 11 ein Filtersieb 1 vorgesehen.

Gemäß der Erfindung ist der Strahlumlenker 3 zwischen dem Kugelsitz 14 und dem Flachsitz 9 angeordnet. Die Mantelfläche des Strahlumlenkers 3 ist dabei so ausgeformt, dass der Winkel γ, um den der Stromfaden q in Strömungsrichtung abgelenkt wird ≤ 30° ist.

In einer ersten Ausgestaltung ist der Strahlumlenker (3) rotationssymmetrisch um eine Längsachse a-a des Ventils ausgebildet. Die Mantelfläche des Strahlumlenkers besitzt dabei die Form eines Kegelstumpfes, wobei der Strahlumlenker über Stege an das Ventilteil angebunden ist.

In einer weiteren Ausgestaltung besitzt der Querschnitt des Strahlumlenkers die Form eines Trapezes. Der Strahlumlenker ist dabei nicht rotationssymmetrisch, sondern erstreckt sich quer zur Strömungsrichtung und ist direkt an das Ventilteil angebunden.

Der Stromfaden q wird sich vom Kugelsitzaustritt 2 um den Strahlumlenker 3 einerseits nach der Umlenkung in Richtung des Arbeitsdruckanschlusses A ausprägen und andererseits in Richtung des Ringströmungseintritts 4 zwischen dem Stößel 6 und der Wandung 7 in Richtung des Flachsitzes 8 durch den Flanschteil I des Proportional-Druckregelventils 10 ausbilden.

Mit dem Bezugszeichen 5 ist beispielhaft eine Abströmkante am Ringströmungseintritt 4 bezeichnet; sie kann, wie in der Figur dargestellt, verrundet ausgeführt sein, wobei sich ein Krümmungsradius in der Größenordnung von 0,1 NW oder größer als besonders vorteilhaft erweist. Alternativ dazu können die Abströmkanten scharfkantig ausgeführt sein.

Wie aus Figur 2 ersichtlich, beträgt der Winkel γ, um den der Stromfaden in Strömungsrichtung abgelenkt wird ≤ 30. Hierbei sind die Kanten des Strahlumlenkers 3 verrundet ausgeführt, wobei der Krümmungsradius R in der Größenordnung von 0,1 NW oder größer liegt.

Der Strahlumlenker 3 ist derart zwischen dem Kugelsitz 14 und dem Flachsitz 8 angeordnet, dass der Positionierabstand v zum Kugelsitzaustritt 2 ≥ 0,5 NW ist und der Positionierabstand h zum Ringströmungseintritt 4 ≥ 0,3 NW ist. Durch diese Positionierabstände in Verbindung mit der Kegelmantelgeometrie des Grundkörpers des Strahlumlenkers 3 beträgt der Unterschied der Winkel α und β zwischen den Projektionslinien z bzw. y vom Scheitelpunkt des Strahlumlenkers 3 zur Ein- bzw. zur Abströmkante hin und der mittleren Strömungsachse x-x im Strahlumlenkerbereich kleiner als 3 ° und es wird eine gute Strömungssymmetrie bezüglich der Normalen s entlang der mittleren Strömungsachse x-x im Strahlumlenkerbereich erzielt. Vorzugsweise sind die Winkel α und β ≤ 23 °.

Die Winkel α und β sowie die Normale s sind in der Figur 2 eingezeichnet. Des Weiteren ist in Figur 2 der Durchmesser D des Strahlumlenkers 3 eingezeichnet, der erfindungsgemäß ≤ 1,25 NW ist.

### Bezugszeichen

- 1: Filtersieb
- 2: Kugelsitzaustritt
- 3: Strahlumlenker
- 4: Ringströmungseintritt
- 5: Abströmkante
- 6: Stößel
- 7: Wandung
- 8: Flachsitz
- 9: Schließglied
- 10: Proportional-Druckregelventil
- 11: Zulauföffnung
- 12: Ablauföffnung
- 13: Ablauföffnung
- 14: Kugelsitz
- 15: Öffnung des Flachsitzes

- T: Tank
- I: Flanschteil
- P: Zulaufdruck
- A: Arbeitsdruckanschluss
- D: Durchmesser des Strahlumlenkers 3
- NW: Nennweite, Durchmesser der Öffnung 15 des Flachsitzes 8
- R: Krümmungsradius der Kanten des Strahlumlenkers 3
- v: Positionierabstand zwischen Strahlumlenker 3 und Kugelsitzaustritt 2
- h: Positionierabstand zwischen Strahlumlenker 3 und Ringströmungseintritt
- y: Projektionslinie in Richtung Abströmkante
- z: Projektionslinie in Richtung Anströmkante
- x-x: mittlere Strömungsachse im Strahlumlenkerbereich
- a-a: Längsachse des Proportional-Druckregelventils
- α: Winkel zwischen x und z
- β: Winkel zwischen x und y
- γ: Winkel, um den der Stromfaden vom Strahlumlenker 3 abgelenkt wird
- s: Normale entlang der mittleren Strömungsachse x-x im Strahlumlenkerbereich

## Patentansprüche

1. Proportional-Druckregelventü (10) zur Regelung des Druckniveaus in einem Hydraulikkreis, insbesondere in einem Hydraulikkreis eines Automatgetriebes, umfassend ein Magnetteil und ein Ventilteil, wobei das Ventilteil eine Zulauföffnung (11) für den Zulaufvolumenstrom, eine erste Ablauföffnung (12) für den Arbeitsdruckanschluss, eine zweite Ablauföffnung (13) für den Tankvolumenstrom, einen Kugelsitz (14), einen mit einer Öffnung versehenen Flachsitz (8), ein Schließglied (9) zur Steuerung der Durchlaufmenge durch die Öffnung (15) des Flachsitzes (8) und einen zwischen dem Kugelsitz (14) und dem Flachsitz (8) angeordneten Strahlumlenker (3) aufweist, wobei die Mantelfläche des Strahlumlenkers (3) so ausgebildet ist, dass der Winkel (γ) um den der Stromfaden (q) in Strömungsrichtung abgelenkt wird ≤ 30° ist, **dadurch gekennzeichnet, dass**
der Strahlumlenker (3) derart ausgebildet und positioniert ist, dass der Unterschied der Winkel (α, β) zwischen den Projektionslinien (z, y) vom Scheitelpunkt des Strahlumlenkers (3) zur Ein- bzw. zur Abströmkante hin und der mittleren Strömungsachse (x-x) im Strahlumlenkerbereich kleiner als 3° beträgt.

2. Proportional-Druckregelventil nach Anspruch 1, **dadurch gekennzeichnet, dass** der Strahlumlenker (3) rotationssymmetrisch um eine Längsachse (a-a) ausgebildet ist, die Mantelfläche des Strahlumlenker (3) die Form eines Kegelstumpfes besitzt und der Strahlumlenker (3) über Stege an das Ventilteil angebunden ist.

3. Proportional-Druckregelventil nach Anspruch 1, **dadurch gekennzeichnet, dass** die Querschnittsfläche des Strahlumlenkers (3) trapezförmig ist und der Strahlumlenker (3) quer zur Strömungsrichtung angeordnet ist.

4. Proportional-Druckregelventil nach einem der vorherigen Ansprüche, **dadurch gekennzeichnet, dass** die Kanten des Strahlumlenkers (3) verrundet ausgeführt sind, wobei der Krümmungsradius (R) in der Größenordnung von 0,1 NW oder größer liegt.

5. Proportional-Druckregelventil nach einem der vorherigen Ansprüche, **dadurch gekennzeichnet, dass** der Strahlumlenker (3) derart zwischen dem Kugelsitz (14) und dem Flachsitz (8) angeordnet ist, dass der Positionierabstand (v) zum Kugelsitzaustritt (2) ≥ 0,5 NW ist und der Positionierabstand (h) zum Ringströmungseintritt (4) ≥ 0,3 NW ist.

6. Proportional-Druckregelventil nach einem der vorherigen Ansprüche, **dadurch gekennzeichnet, dass** der Durchmesser (D) des Strahlumlenkers (3) ≤ 1,25 NW ist.

7. Proportional-Druckregelventil nach einem der vorherigen Ansprüche, **dadurch gekennzeichnet, dass** die Abströmkanten (5) am Ringströmungseintritt (4) verrundet oder scharfkantig ausgeführt sind, wobei bei verrundet ausgeführten Abströmkanten (5) der Krümmungsradius in der Größenordnung von 0,1 NW oder größer liegt.

8. Proportional-Druckregelventil nach einem der vorangehenden Ansprüche, **dadurch gekennzeichnet, dass** der Strahlumlenker (3) derart ausgebildet und positioniert ist, dass der Anströmwinkel (γ) zur Längsachse (a-a) des Proportional-Druckregelventils ≤ 60 ° beträgt.

9. Proportional-Druckregelventil nach Anspruch 1, **dadurch gekennzeichnet, dass** die Winkel (α, β) zwischen den Projektionslinien (z, y) vom Scheitelpunkt des Strahlumlenkers (3) zur Ein- bzw. zur Abströmkante hin und der mittleren Strömungsachse (x-x) im Strahlumlenkerbereich ≤ 23 ° sind.

## Claims

1. Proportional pressure control valve (10) for regulating the pressure level in a hydraulic circuit, in particular in a hydraulic circuit of an automatic gearbox, comprising a magnet part and a valve part, the valve part having an inlet opening (11) for the inlet volumetric flow, a first outlet opening (12) for the working-pressure connection, a second outlet opening (13) for the tank volumetric flow, a spherical seat (14), a flat seat (8) which is provided with an opening, a closing member (9) for controlling the throughput quantity through the opening (15) of the flat seat (8), and a jet deflector (3) which is arranged between the spherical seat (14) and the flat seat (8), the circumferential face of the jet deflector (3) being configured in such a way that the angle (γ), by which the flow filament (q) is deflected in the flow direction, is ≤ 30°, **characterized in that** the jet deflector (3) is configured and positioned in such a way that the difference of the angles (α, β) between the projection lines (z, y) from the vertex of the jet deflector (3) towards the inflow edge and towards the outflow edge and the middle flow axis (x-x) in the jet deflector region is smaller than 3°.

2. Proportional pressure control valve according to Claim 1, **characterized in that** the jet deflector (3) is configured so as to be rotationally symmetrical about a longitudinal axis (a-a), the circumferential face of the jet deflector (3) has the shape of a truncated cone and the jet deflector (3) is attached to the valve part via webs.

3. Proportional pressure control valve according to Claim 1, **characterized in that** the cross-sectional area of the jet deflector (3) is trapezoidal and the jet deflector (3) is arranged transversely with respect to the flow direction.

4. Proportional pressure control valve according to one of the preceding claims, **characterized in that** the edges of the jet deflector (3) are of rounded configuration, the curvature radius (R) lying in the order of magnitude of 0.1 times the nominal width or greater.

5. Proportional pressure control valve according to one of the preceding claims, **characterized in that** the jet deflector (3) is arranged between the spherical seat (14) and the flat seat (8) in such a way that the positioning spacing (v) from the spherical-seat outlet (2) is ≥ 0.5 times the nominal width and the positioning spacing (h) from the annular-flow inlet (4) is ≥ 0.3 times the nominal width.

6. Proportional pressure control valve according to one of the preceding claims, **characterized in that** the diameter (D) of the jet deflector (3) is ≤ 1.25 times the nominal width.

7. Proportional pressure control valve according to one of the preceding claims, **characterized in that** the outflow edges (5) at the annular-flow inlet (4) are of rounded or sharp-edged configuration, the curvature radius lying in the order of magnitude of 0.1 times the nominal width or greater in the case of outflow edges (5) of rounded configuration.

8. Proportional pressure control valve according to one of the preceding claims, **characterized in that** the jet deflector (3) is configured and positioned in such a way that the approaching-flow angle (γ) with respect to the longitudinal axis (a-a) of the proportional pressure control valve is ≤ 60°.

9. Proportional pressure control valve according to Claim 1, **characterized in that** the angles (α, β) between the projection lines (z, y) from the vertex of the jet deflector (3) towards the inflow edge and towards the outflow edge and the middle flow axis (x-x) in the jet deflector region are ≤ 23°.

## Revendications

1. Soupape proportionnelle de régulation de pression (10) pour la régulation du niveau de pression dans un circuit hydraulique, en particulier dans un circuit hydraulique d'une boîte de vitesses automatique, comprenant une partie magnétique et une partie soupape, la partie soupape présentant une ouverture d'amenée (11) pour le débit volumique d'amenée, une première ouverture de sortie (12) pour le raccordement à la pression de travail, une deuxième ouverture de sortie (13) pour le débit volumique du réservoir, un siège sphérique (14), un siège plat (8) muni d'une ouverture, un organe de fermeture (9) pour la commande de la quantité d'écoulement à travers l'ouverture (15) du siège plat (8) et un déflecteur de jet (3) disposé entre le siège sphérique (14) et le siège plat (8), la surface d'enveloppe du déflecteur de jet (3) étant réalisée de telle sorte que l'angle (γ) duquel le trajet du courant (q) est dévié dans la direction d'écoulement soit ≤ 30°, **caractérisée en ce que** le déflecteur de jet (3) est réalisé et positionné de telle sorte que la différence des angles (α, β) entre les lignes de projection (z, y) depuis le sommet du déflecteur de jet (3) jusqu'à l'arête d'afflux respectivement jusqu'à l'arête d'évacuation et l'axe d'écoulement central (x-x) dans la région du déflecteur de jet soit inférieure à 3°.

2. Soupape proportionnelle de régulation de pression selon la revendication 1, **caractérisée en ce que** le déflecteur de jet (3) est réalisé avec une symétrie de révolution autour d'un axe longitudinal (a-a), la surface d'enveloppe du déflecteur de jet (3) a une forme tronconique et le déflecteur de jet (3) est relié par le biais de nervures à la partie soupape.

3. Soupape proportionnelle de régulation de pression selon la revendication 1, **caractérisée en ce que** la surface en section transversale du déflecteur de jet (3) est trapézoïdale et le déflecteur de jet (3) est disposé transversalement à la direction d'écoulement.

4. Soupape proportionnelle de régulation de pression selon l'une quelconque des revendications précédentes, **caractérisée en ce que** les arêtes du déflecteur de jet (3) sont réalisées sous forme arrondie, le rayon de courbure (R) étant de l'ordre de 0,1 NW ou plus.

5. Soupape proportionnelle de régulation de pression selon l'une quelconque des revendications précédentes, **caractérisée en ce que** le déflecteur de jet (3) est disposé entre le siège sphérique (14) et le siège plat (8) de telle sorte que la distance de positionnement (v) jusqu'à la sortie du siège sphérique (2) soit ≥ 0,5 NW et que la distance de positionnement (h) jusqu'à l'entrée d'écoulement annulaire (4) soit ≥ 0,3 NW.

6. Soupape proportionnelle de régulation de pression selon l'une quelconque des revendications précédentes, **caractérisée en ce que** le diamètre (D) du déflecteur de jet (3) est ≤ 1,25 NW.

7. Soupape proportionnelle de régulation de pression selon l'une quelconque des revendications précédentes, **caractérisée en ce que** les arêtes d'évacuation (5) au niveau de l'entrée d'écoulement annulaire (4) sont réalisées sous forme arrondie ou avec des arêtes vives, le rayon de courbure, dans le cas d'arêtes d'évacuation (5) réalisées sous forme arrondie, étant de l'ordre de 0,1 NW ou plus.

8. Soupape proportionnelle de régulation de pression selon l'une quelconque des revendications précédentes, **caractérisée en ce que** le déflecteur de jet (3) est réalisé et positionné de telle sorte que l'angle d'afflux (γ) par rapport à l'axe longitudinal (a-a) de la soupape proportionnelle de régulation de pression soit ≤ 60°.

9. Soupape proportionnelle de régulation de pression selon la revendication 1, **caractérisée en ce que** l'angle (α, β) entre les lignes de projection (z, y) depuis le sommet du déflecteur de jet (3) jusqu'à l'arête d'afflux respectivement jusqu'à l'arête d'évacuation et l'axe d'écoulement central (x-x) dans la région du déflecteur de jet soit ≤ 23°.
